# FASCICULE DE BREVET EUROPEEN

(11) **EP 3 687 727 B1**
(45) Date de publication et mention de la délivrance du brevet: **23.03.2022**
(21) Numéro de dépôt: 18811329.4
(22) Date de dépôt: 28.09.2018
(51) Int. Cl.: B23H 7/26, B23H 9/10, B23H 9/14, C04B 35/119

(54) **DISPOSITIF PORTE-ELECTRODE(S) POUR USINAGE PAR ELECTROEROSION, ET PROCEDE D'OBTENTION**
VORRICHTUNG ZUM HALTEN EINER ODER MEHRERER ELEKTRODEN ZUR FUNKENEROSIONSBEARBEITUNG UND VERFAHREN ZU IHRER HERSTELLUNG
DEVICE FOR HOLDING ONE OR MORE ELECTRODES FOR ELECTRICAL DISCHARGE MACHINING, AND METHOD OF OBTAINING SAME

(30) Priorité: 29.09.2017 FR 1759110
(43) Date de publication de la demande: 05.08.2020
(73) Titulaire: Safran, 75015 Paris (FR)
(72) Inventeur: DUCAS, Martin, 77550 Moissy-Cramayel (FR); BECHELANY, Mirna, 77550 Moissy-Cramayel (FR)
(74) Mandataire: Ernest Gutmann - Yves Plasseraud S.A.S.
(86) Numéro de dépôt international: PCT/FR2018/052397
(87) Numéro de publication internationale: WO 2019/063953

(56) Documents cités:
- DE-A1- 10 103 292
- US-A1- 2012 132 623
- US-B1- 6 225 589
- J Deckers ET AL: "Additive Manufacturing of Ceramics: A Review", J. Ceram. Sci. Tech, 1 novembre 2014 (2014-11-01), pages 5-245, XP055240331, DOI: 10.4416/JCST2014-00032 Extrait de l'Internet: URL:url [extrait le 2016-01-12]

## Description

La présente invention concerne un dispositif (guide) porte-électrode(s) pour un usinage par électroérosion (EDM / electrical discharge machining), et son procédé d'obtention.

Le domaine d'application concerné est celui des turbomachines à gaz pour aéronefs.

Par exemple dans EP 0449694 est présenté un tel dispositif porte-électrode(s) comprenant un corps présentant une partie rectiligne dans laquelle est ménagé un premier conduit de passage d'électrode(s) et dans US 6225589 B est présenté un dispositif selon le préambule de la revendication 1.

Dans le présente texte, toute expression « un(e)» couvre « au moins un(e)», donc un(e) ou plusieurs.

Parmi les problèmes existant dans le domaine, on peut relever les suivants, dans le cadre par exemple du perçage d'une aube multi-pale de distributeur haute pression dans une turbomachine à gaz pour aéronef, en liaison alors avec une accessibilité de l'électrode de perçage EDM dans une zone inter-pale.

Les contraintes principales sont :
- conserver les propriétés des guides standards (isolant électrique, adaptation à une interface machine conventionnelle, taux d'usure faible, résistance mécanique...) ;
- présenter une géométrie fine, et adaptée en forme, pour accéder dans la zone inter-pale et y réaliser/ usiner des trous,
- apporter un diélectrique (liquide d'usinage) dans une zone de perçage qui est typiquement confinée.

En outre, et de façon générale, on peut noter l'importance de :
- comment définir un dispositif EDM à géométrie adaptée en forme et taille pour accéder dans des zones d'usinage peu accessibles,
- assurer une obtention du dispositif rapide et peu onéreuse, en s'assurant que le dispositif permet ensuite des durées d'usinage longues,
- permettre de réaliser un dispositif spécifique pour chaque situation d'usinage, si nécessaire,
- permettre ensuite une automatisation du fonctionnement du dispositif, notamment pour les orientations de perçage.

Pour répondre à une partie au moins de cette problématique, il est proposé que le dispositif présenté ci-avant soit tel que ledit corps présente en outre une partie courbe monobloc dans laquelle est ménagé un second conduit courbe d'alimentation en liquide diélectrique et où passe (c'est-à-dire est ménagé) un prolongement courbe dudit premier conduit dans lequel passe(nt) la(les) électrode(s), le prolongement courbe et le second conduit courbe étant en céramique, avec une rugosité arithmétique interne de : Ra < 2µm, et de préférence Ra < 0.5µm.

Pour favoriser encore davantage l'accessibilité et une facilité d'installation sur les outillages existants, il est proposé :
- que, dans la partie rectiligne, soit en outre ménagé un prolongement rectiligne du second conduit courbe,
- que les parties courbe et rectiligne soient distinctes l'une de l'autre, et collées ensemble, bout à bout, la partie rectiligne présentant des moyens de raccordement avec une machine de micro perçage par électroérosion (EDM).

Pour favoriser encore davantage l'apport du diélectrique (liquide d'usinage) dans la zone d'usinage, il est par ailleurs proposé, individuellement ou en combinaison :
- que soient prévus plusieurs dits seconds conduits courbes entourant le prolongement courbe du premier conduit, coaxialement au prolongement courbe dudit premier conduit,
- que ces seconds conduits courbes présentent, ensemble, perpendiculairement à l'axe suivant lequel ils s'étendent coaxialement, une section comprise entre 4 et 8mm².

De fait, on favorisera ainsi un flux laminaire de liquide dans la zone d'usinage, une immersion locale, une stabilité de l'arc électrique créé entre l'électrode concernée et la pièce: La zone d'usinage est plongée totalement dans le diélectrique.

Pour permettre/favoriser une orientation de l'électrode concernée dans son conduit récepteur, il est en outre proposé qu'au moins dans la partie courbe, ledit prolongement courbe présente une rugosité arithmétique interne 0.01 µm < Ra < 0.3µm.

Ceci invitera d'autant plus à utiliser, comme procédé d'obtention spécifiquement dédié à la réalisation du dispositif porte-électrode(s) précité, avec tout ou partie des caractéristiques énoncées, un procédé comprenant une fabrication additive du dispositif à partir d'un matériau céramique.

On définit l'expression matériau céramique comme un tel matériau, en tant que tel (comme alumine, zircone, nitrure de silicium, etc...) ou en tant que composite céramique ; composite à matrice céramique ou CMC.

Avec ce procédé, le dispositif guide intégrera donc des moyens d'amenée du liquide d'usinage (diélectrique), via le(s) second(s) conduit(s), ce qui n'aurait pas été possible avec un guide usiné.

En outre, avec un tel procédé, on pourra, de façon possiblement combinée, prévoir:
- que le matériau céramique comprenne de l'alumine et du zircone,
- que le matériau céramique comprenne de l'alumine et des particules de zircone dispersées dans la structure d'alumine et soit obtenu par mélange par voie liquide,
- qu'après la fabrication additive, un post-traitement de l'intérieur du second conduit courbe, et de préférence de tout l'intérieur de ladite partie courbe monobloc, soit réalisé, par usinage par écoulement abrasif (AFM).

Ainsi, on favorisera de façon rapide, maitrisée, répétable aisément, et à moindre coût, l'optimisation des paramètres du procédé additif pour répondre favorablement aux différentes exigences en termes de caractéristiques géométriques et dimensionnelles ainsi que vis-à-vis de l'état de surface attendu à l'intérieur des conduits.

L'invention sera si nécessaire plus complètement appréhendée et d'autres détails, caractéristiques et avantages pourront apparaître à la lecture de la description suivante faite à titre d'exemple non limitatif en référence aux dessins annexés, dans lesquels :

la figure 1 schématise une turbomachine à gaz pour aéronef ;
- les figures 2,3 schématisent un exemple du type de pièce concernée par l'application du dispositif de l'invention, comme connu dans l'art antérieur ;
- la figure 4 est un exemple d'interventions entre deux aubes successives fixes, sur une zone d'intervention 35 peu accessible, et à courbure évolutive ;
- les figures 5 et 8 schématisent un dispositif porte-électrode(s) pour usinage par électroérosion conforme à l'invention;
- la figure 6 est une vue de face selon la flèche VI de la figure 5 ;
- et la figure 7 schématise la réalisation interne desdites parties rectiligne et courbe et un possible raccord entre elles.

### DESCRIPTION DETAILLEE

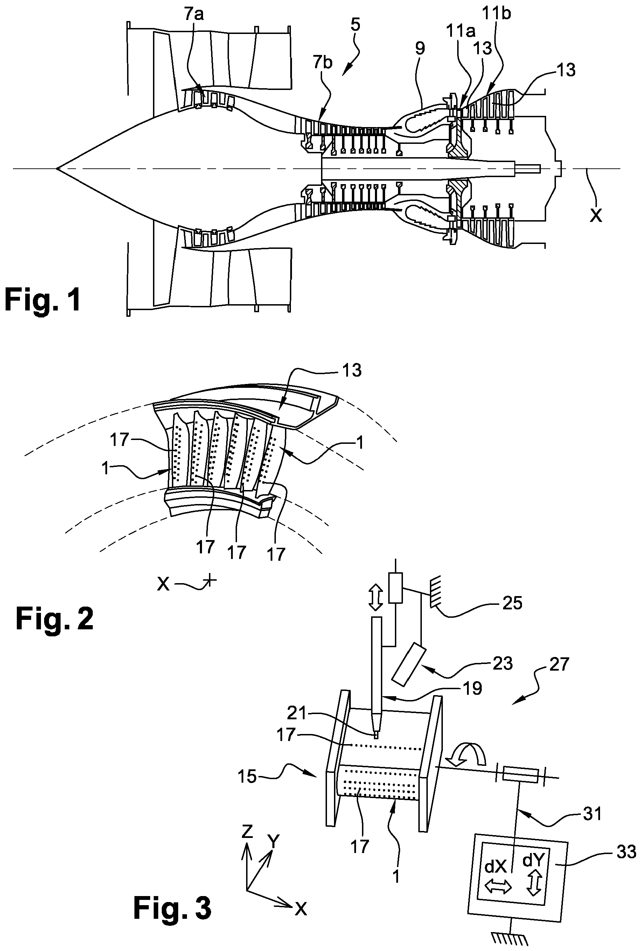

Un exemple du type de pièce concernée par l'application du dispositif de l'invention est illustré figures 2 et 3. Il s'agit d'une aube 1 de distributeur 3 haute pression, dans une turbomachine 5, comme schématisé figure 1. L'aube 1 peut être multi-pale.

Ceci n'est cependant pas limitatif.

Comme connu, une turbomachine à gaz pour aéronef telle celle repérée 5, comporte typiquement une entrée d'air (plénum) qui forme une ouverture pour l'admission d'un flux d'air vers le moteur proprement dit. Généralement, la turbomachine comprend une ou plusieurs sections de compression de l'air admis (généralement une section basse pression 7a et une section haute pression 7b). L'air ainsi comprimé est admis dans la chambre de combustion 9 et mélangé avec du carburant avant d'y être brûlé.

Les gaz de combustion chauds sont ensuite détendus dans différents étages de turbine 11a, 11b, tels un étage à haute pression 11a immédiatement en aval de la chambre, puis des étages de turbine à basse pression 11b.

Chaque étage de turbine, telle 11a ou 11b, comporte une rangée d'aubes fixes, aussi appelée distributeur 13, suivie d'une rangée d'aubes mobiles espacées circonférentiellement, autour du disque de la turbine. Le distributeur 13 dévie et accélère le flux de gaz issu de la chambre de combustion vers les aubes mobiles de turbine afin d'entraîner en rotation ces aubes mobiles et le disque de la turbine. L'axe de rotation est repéré X.

Le distributeur 13 comprend ainsi une pluralité d'aubes 1 disposées radialement par rapport à l'axe X et reliant un élément annulaire radialement interne (ou plateforme interne) et un élément annulaire radialement externe (ou plateforme externe). L'ensemble forme une veine annulaire en regard des aubages mobiles de la turbine.

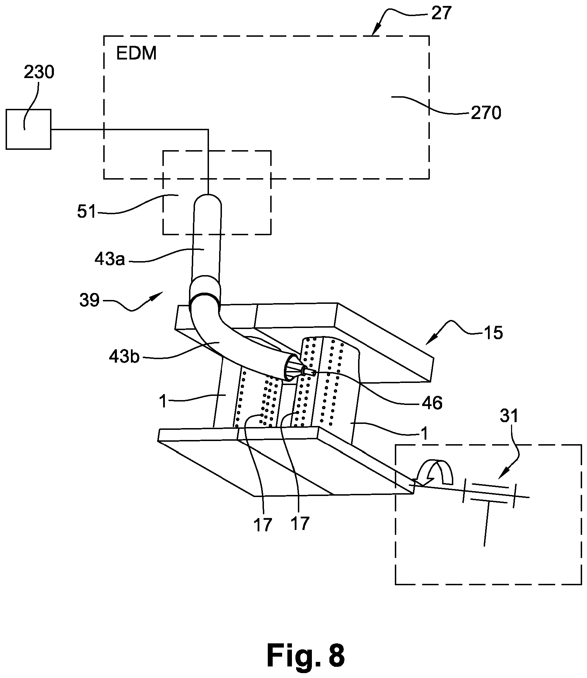

Les aubes fixes 1 sont ainsi disposées en une couronne (voir pointillés figure 2) qui peut, le cas échéant, être divisée en une pluralité de segments répartis circonférentiellement autour de l'axe X. Chaque segment, tel celui très schématique repéré 15 figure 3 ou 8, comprend une ou plusieurs aubes fixes 1 adjacentes solidaires d'un élément en secteur d'anneau, pour forme le distributeur 13.

Les aubes de distributeur sont généralement obtenues de fonderie et peuvent être réalisées dans un superalliage à base de nickel ou de matériau monocristallin qui présente une très bonne tenue thermique. Notamment les distributeurs 13 de turbine haute pression sont des pièces exposées à de très fortes contraintes thermiques.

Afin de diminuer la température et de limiter sa dégradation, un refroidissement des distributeurs est souvent nécessaire. Des trous 17, par exemple formés dans des inserts placés à l'intérieur des aubes, permettent un refroidissement des distributeurs. De l'air « frais » prélevé au niveau du compresseur de la turbomachine peut impacter par ces perçages la face interne de l'aube, pour la refroidir.

Les perçages des trous 17 peuvent être réalisés sur l'aube 1, typiquement par électroérosion ou laser.

Sur la figure 3, qui schématise une solution de l'art antérieur, les perçages 17 sont accessibles avec un outillage d'usinage par électroérosion (EDM) qui comprend un dispositif ou guide de perçage droit (rectiligne) 19 d'où débouche une électrode 21. Une buse 23, fixe par rapport au bâti 25 de la machine 27 de perçage, permet un arrosage de la zone de perçage avec un liquide diélectrique. Des moyens 31 de mise en mouvement permettent d'orienter la pièce à percer (orientations dX, dY), via une table d'orientation 33.

Percer, notamment dans une telle situation, peut amener à être confronté aux problèmes suivants, comme déjà noté :
- si possible conserver les propriétés des guides standards,
- garantir à l'électrode de perçage EDM une accessibilité adaptée, en particulier quand la zone concernée est exiguë, peu accessible, voire tortueuse,
- configurer en conséquence une géométrie simple adaptée à plusieurs configurations possibles,
- améliorer les conditions de perçages/'usinages, tout en en limitant la durée.

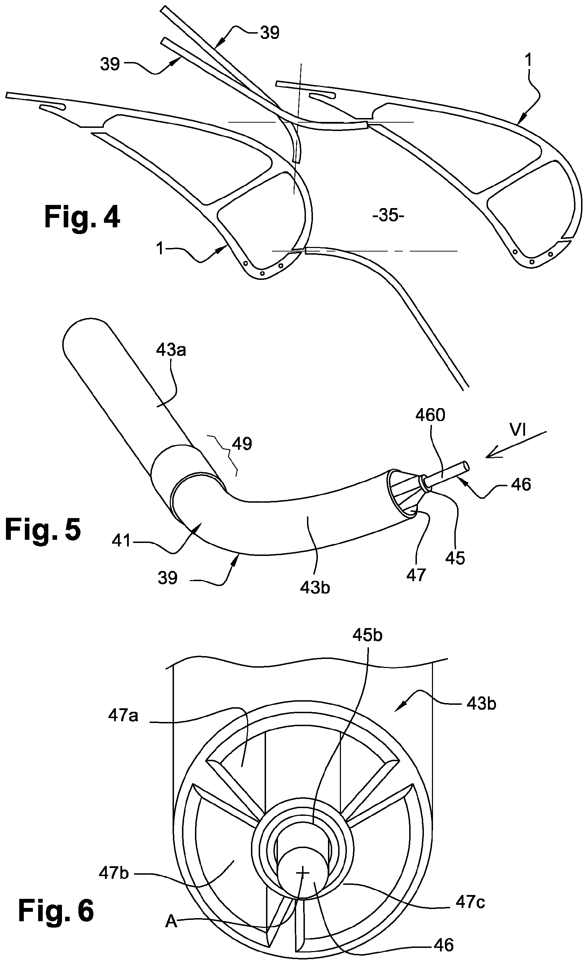

Un exemple d'interventions posant ce type de problèmes est schématisé figure 4 où l'on voit deux aubes 1 successives fixes, avec entre elles une zone d'intervention 35 peu accessible, et à courbure évolutive.

Aussi est-il proposé de remplacer le dispositif ou guide de perçage droit (rectiligne) 19 par le dispositif 39 porte-électrode(s) d'usinage par électroérosion ; voir figures 5,6,8 notamment.

Le dispositif 39 comprend un corps 41 qui présente une partie tubulaire, rectiligne 43a puis courbe 43b, monoblocs chacune.

Au moins dans la partie courbe, on voit figures 5,6 ou 7 que sont ménagés :
- (au moins) un premier conduit 45 de passage d'au moins une électrode 46, en l'espèce une seule,
- et (au moins) un second conduit 47 d'alimentation en liquide diélectrique du bout libre du corps, là où débouche l'extrémité active 460 de l'électrode 46 qui va venir au contact de la pièce à usiner.

Dans l'exemple préféré illustré, ce second conduit 47 présente plusieurs segments radiaux, ici trois 47a,47b,47c, disposés autour de la direction d'allongement A du corps 41, cette direction étant rectiligne puis courbe.

Au centre, l'électrode 46 passe dans un prolongement courbe 45b qui, de préférence, fait suite audit (au moins) premier conduit 45.

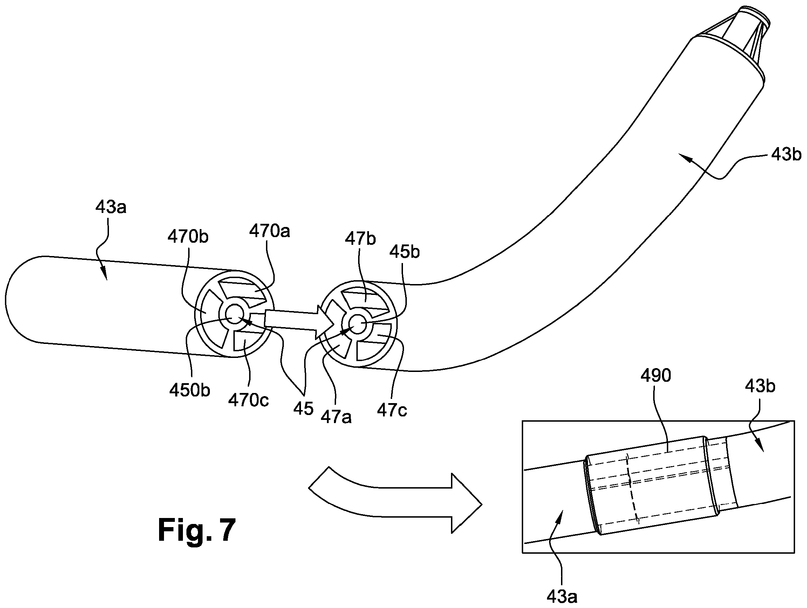

On préfèrera que les trois segments 47a,47b,47c courbes soient issus, dans la partie rectiligne, d'autant de segments rectilignes, 470a,470b,470c dans l'exemple (figure 7), disposés en correspondance, coaxialement, et en communication avec eux.

Dans ce cas, le prolongement courbe 45b sera de préférence lui-même issu, dans la partie rectiligne, d'un tronçon rectiligne central 450b du conduit 45 de passage de l'électrode 46, et en communication avec lui.

Le prolongement courbe 45b dudit (au moins) un premier conduit et le second conduit (47;47a,47b,47c,470a,470b,470c) courbe dans lequel ce prolongement courbe 45b est donc ménagé sont en matériau céramique, avec une rugosité arithmétique interne de : Ra < 2µm.

Ainsi on peut viser une construction monobloc, peu onéreuse, reproductible rapidement et facilement, en particulier par une fabrication additive en trois dimensions (3D) par DLP (Digital Light Processing - TM) du dispositif, à partir d'un matériau céramique (composite ou non).

Dans l'exemple privilégié illustré, sont présents plusieurs dits seconds conduits courbes 47a,47b,47c entourant le prolongement courbe central 45b du premier conduit, coaxialement à ce prolongement courbe.

Comme déjà mentionné, ces seconds conduits courbes présenteront, favorablement et ensemble, une section perpendiculaire à l'axe suivant lequel ils s'étendent coaxialement comprise entre 4 et 8mm². Ainsi, on pourra alimenter favorablement la zone d'usinage en diélectrique, et notamment permettre une immersion locale.

Réaliser le dispositif 39 porte-électrode(s) avec, au moins dans la partie courbe, un dit prolongement courbe 45b et/ou un second conduit 47 ayant une rugosité arithmétique interne 0.01µm < Ra < 0.3µm va limiter le frottement de l'électrode sur les parois du guide et donc favoriser le mouvement de l'électrode.

Pour notamment permettre d'utiliser des parties courbes 43b différentiées suivant les besoins (différentes courbures, différentes longueurs, voire différents diamètres...), il a été prévu que les parties respectivement courbe et rectiligne soient structurellement distinctes l'une de l'autre, collées ensemble, bout à bout, en extrémité liée 49, ou raccordées via un raccord ou manchon 490 si nécessaire (figure 7).

La partie rectiligne 43a présentera alors en outre des moyens 51 de raccordement avec une tête 270 de la machine 27 de perçage.

Le liquide diélectrique proviendra d'une source 230 (figure 8) et sera donc admis dans le dispositif 39 porte électrode(s) pour arroser au plus près la zone de perçage avec ce liquide.

Concernant le procédé d'obtention déjà mentionné, le matériau céramique comprendra favorablement de l'alumine et du zircone.

On pourra alors tirer parti des avantages de deux matériaux : la dureté et l'inertie chimique de l'alumine, et le renforcement par transformation de phase de la zircone. Une manière de réaliser ceci pourra être de créer une dispersion homogène de grains de zircone dans une matrice alumine. Une fissure se propageant dans un tel matériau provoquera la transformation q-m des grains de zircone, et sera donc ralentie par les contraintes de compression résultant de la transformation. Ceci nécessite deux conditions : d'une part, que les grains de zircone soient quadratiques au départ, et d'autre part qu'ils soient susceptibles de se transformer sous contrainte.

De nouveau pour assurer un compromis entre une performance quant à la mise en place de l'électrode 46 et à l'amenée du liquide diélectrique avec une bonne qualité d'écoulement et quant à une réalisation peu onéreuse, rapide et possiblement en série du dispositif 39, il est proposé de recourir, après la fabrication additive, à un post-traitement de l'intérieur du(des) second(s) conduit(s) (47 ; 47a,47b,47c) courbe(s), et de préférence de tout l'intérieur de ladite partie courbe 43b monobloc, par usinage par écoulement abrasif (AFM). Un tel usinage par extrusion de pâte abrasive permettra de façonner simultanément plusieurs cavités sur une même pièce ainsi que de traiter plusieurs dizaines de pièces dans un seul montage. L'outillage peut aisément être conçu pour que son changement soit réalisé en quelques minutes pour des applications de production.

## Revendications

1. Dispositif porte-électrode(s) pour un usinage par électroérosion, comprenant un corps (41) présentant une partie rectiligne (43a) dans laquelle est ménagé au moins un premier conduit (45) de passage d'électrode(s) (46), ledit corps présentant en outre une partie courbe (43b) monobloc dans laquelle est ménagé au moins un second conduit (47 ; 47a,47b,47c) courbe d'alimentation en liquide diélectrique et où passe un prolongement courbe (45b) dudit au moins un premier conduit (45) dans lequel passe(nt) la(les) électrode(s) (46), **caractérisé en ce que** ledit prolongement courbe et le second conduit courbe sont en matériau céramique, avec une rugosité arithmétique interne de : Ra < 2µm.

2. Dispositif porte-électrode(s) selon la revendication 1 comprenant plusieurs dits seconds conduits (47a,47b,47c) courbes entourant le prolongement courbe (45b) du premier conduit (45), coaxialement au prolongement courbe dudit premier conduit.

3. Dispositif porte-électrode(s) selon l'une quelconque des revendications précédentes, dans lequel, dans la partie rectiligne (43a), est en outre ménagé un prolongement rectiligne du second conduit (4) courbe.

4. Dispositif porte-électrode(s) selon la revendication 2, seule ou en combinaison avec la revendication 3, dans lequel les seconds conduits (47a,47b,47c) courbes présentent, ensemble, une section perpendiculaire à l'axe suivant lequel ils s'étendent coaxialement comprise entre 4 et 8mm².

5. Dispositif porte-électrode(s) selon l'une quelconque des revendications précédentes dans lequel, au moins dans la partie courbe, ledit prolongement courbe (45b) présente une rugosité arithmétique interne 0.01 µm < Ra < 0.3µm.

6. Dispositif porte-électrode(s) selon l'une quelconque des revendications précédentes dans lequel les parties courbe (43b,45b) et rectiligne (43a) sont distinctes l'une de l'autre, collées ensemble, bout à bout, la partie rectiligne présentant des moyens de raccordement avec une machine de micro perçage par électroérosion (EDM).

7. Procédé d'obtention spécifiquement dédié à la réalisation du dispositif porte-électrode(s) selon l'une quelconque des revendications précédentes, ledit procédé comprenant une fabrication additive du dispositif à partir (39) d'un matériau céramique.

8. Procédé selon la revendication 7 dans lequel le matériau céramique comprend de l'alumine et du zircone.

9. Procédé selon la revendication 7 ou 8 dans lequel le matériau céramique comprend de l'alumine et des particules de zircone dispersées dans la structure d'alumine et est obtenu par mélange par voie liquide.

10. Procédé selon l'une des revendications 7 à 9 dans lequel, après la fabrication additive, un post-traitement de l'intérieur du second conduit (47 ; 47a,47b,47c) courbe, et de préférence de tout l'intérieur de ladite partie courbe (43b) monobloc, est réalisé, par usinage par écoulement abrasif (AFM).

## Patentansprüche

1. Elektrodenhaltervorrichtung für eine Funkenerosionsbearbeitung, enthaltend einen Körper (41) mit einem geradlinigen Abschnitt (43a), in den zumindest ein erster Kanal (45) für den Durchtritt der Elektrode(n) (46) eingebracht ist, wobei der Körper ferner einen einstückig ausgebildeten, gekrümmten Abschnitt (43b) aufweist, in den zumindest ein zweiter gekrümmter Kanal (47; 47a, 47b, 47c) für die Zufuhr von dielektrischer Flüssigkeit eingebracht ist und in dem eine gekrümmte Verlängerung (45b) des zumindest einen ersten Kanals (45) verläuft, in dem die Elektrode(n) (46) verläuft/laufen,
**dadurch gekennzeichnet, dass**
die gekrümmte Verlängerung und der zweite gekrümmte Kanal aus keramischem Material mit einer inneren arithmetischen Rauheit Ra < 2 µm bestehen.

2. Elektrodenhaltervorrichtung nach Anspruch 1, enthaltend mehrere zweite gekrümmte Kanäle (47a, 47b, 47c), die die gekrümmte Verlängerung (45b) des ersten Kanals (45) koaxial zur gekrümmten Verlängerung des ersten Kanals umgeben.

3. Elektrodenhaltevorrichtung nach einem der vorhergehenden Ansprüche, wobei in dem geradlinigen Abschnitt (43a) fermer eine geradlinige Verlängerung des zweiten gekrümmten Kanals (4) vorgesehen ist.

4. Elektrodenhaltevorrichtung nach Anspruch 2, allein oder in Kombination mit Anspruch 3,
wobei die zweiten gekrümmten Kanäle (47a, 47b, 47c) zusammen einen Querschnitt senkrecht zu der Achse, entlang der sie sich koaxial erstrecken, zwischen 4 und 8 mm² aufweisen.

5. Elektrodenhaltervorrichtung nach einem der vorhergehenden Ansprüche,
wobei zumindest im gekrümmten Abschnitt die gekrümmte Verlängerung (45b) eine innere arithmetische Rauheit von 0,01 µm < Ra < 0,3 µm aufweist.

6. Elektrodenhaltervorrichtung nach einem der vorhergehenden Ansprüche, wobei der gekrümmte Abschnitt (43b, 45b) und der geradlinige Abschnitt (43a) separat voneinander vorliegen und auf Stoß miteinander verbunden sind, wobei der geradlinige Abschnitt Mittel zur Verbindung mit einer Maschine für Mikrobohrung durch Funkenerosion (EDM) aufweist.

7. Herstellungsverfahren zur Herstellung einer Elektrodenhaltevorrichtung nach einem der vorhergehenden Ansprüche,
wobei das Verfahren eine additive Fertigung der Vorrichtung aus (39) einem keramischen Material umfasst.

8. Verfahren nach Anspruch 7,
wobei das keramische Material Aluminiumoxid und Zirkoniumdioxid enthält.

9. Verfahren nach Anspruch 7 oder 8,
wobei das keramische Material Aluminiumoxid und Zirkoniumoxidteilchen enthält, die in der Aluminiumoxidstruktur dispergiert sind, und durch Flüssigmischen erhalten wird.

10. Verfahren nach einem der Ansprüche 7 bis 9,
wobei nach der additiven Fertigung eine Nachbehandlung des Innenraums des zweiten gekrümmten Kanals (47; 47a, 47b, 47c) und vorzugsweise des gesamten Innenraums des einstückig ausgebildeten gekrümmten Abschnitts (43b) durch Fließschleifen (AFM) durchgeführt wird.

## Claims

1. A device for holding one or more electrode(s) for an electrical discharge machining, comprising a body (41) having a rectilinear portion (43a) in which at least one first duct (45) is provided for the passage of one or more electrode(s) (46), said body further having an integral curved portion (43b) which at least one second curved dielectric fluid supply duct (47; 47a, 47b, 47c) is provided and which is passed through by a curved extension (45b) of said at least one first duct (45) in which the electrode(s) (46) pass(es), **characterised in that** said curved extension and the second curved duct are made of a ceramic material, with an inner mean roughness of: Ra<2µm.

2. The device for holding one or more electrode(s) according to claim 1, comprising a plurality of said second curved ducts (47a, 47b, 47c) surrounding the curved extension (45b) of the first duct (45), coaxially with the curved extension of said first duct.

3. The device for holding one or more electrode(s) according to any one of the preceding claims, in which, in the rectilinear portion (43a), a rectilinear extension of the second curved duct (4) is f provided.

4. The device for holding one or more electrode(s) according to claim 2, alone or in combination with claim 3, in which the second curved ducts (47a, 47b, 47c) together have a cross-section perpendicular to the axis along which they coaxially extend between 4 and 8mm².

5. The device for holding one or more electrode(s) according to any one of the preceding claims in which, at least in the curved portion, said curved extension (45b) has an inner mean roughness of 0.01 µm<Ra<0.3µm.

6. The device for holding one or more electrode(s) according to any one of the preceding claims, in which the curved (43b, 45b) and rectilinear (43a) portions are distinct from each other, glued together, end to end, with the rectilinear portion having connecting means for connection with an electrical discharge micro-drilling machine (EDM).

7. The method of production specifically dedicated to the manufacture of the device for holding one or more electrode(s) according to any one of the preceding claims, said method comprising an additive manufacture of the device from (39) a ceramic material.

8. The method according to claim 7, wherein the ceramic material comprises alumina and zirconia.

9. The method according to claim 7 or 8, wherein the ceramic material comprises alumina and zirconia particles dispersed into the alumina structure and is obtained by wet mixing.

10. The method according to one of claims 7 to 9, wherein, after the additive manufacture, an after-treatment inside the second curved duct (47; 47a, 47b, 47c), and preferably of the entire interior of said integral curved portion (43b), is carried out by an abrasive flow machining (AFM).
